# EUROPÄISCHE PATENTSCHRIFT

(11) **EP 0 849 126 B1**
(45) Veröffentlichungstag und Bekanntmachung des Hinweises auf die Patenterteilung: **09.04.2003**
(21) Anmeldenummer: 97119641.5
(22) Anmeldetag: 10.11.1997
(51) Int. Cl.: B60R 21/20

(54) **Gassackrückhalteeinrichtung für eine Kraftfahrzeug**
Airbag restraining device for vehicle
Dispositif de retenue pour coussin de sécurité pour véhicule

(30) Priorität: 19.12.1996 DE 19653175
(43) Veröffentlichungstag der Anmeldung: 24.06.1998
(73) Patentinhaber: Bayerische Motoren Werke Aktiengesellschaft, 80788 München (DE)
(72) Erfinder: Kühl, Michael, 86899 Landsberg (DE)

(56) Entgegenhaltungen:
- EP-A- 0 415 362
- DE-A- 4 328 721
- US-A- 5 398 961

## Beschreibung

Die Erfindung betrifft eine Gassackrückhalteeinrichtung für ein Kraftfahrzeug gemäß dem Oberbegriff des Patentanspruches 1.

Eine derartige Gassackrückhalteeinrichtung ist aus der EP 0 415 362 bekannt. Dort ist ein Airbagmodul beschrieben, das über Träger am Karosseriekörper befestigt und von einem Deckel abgedeckt ist. Der Deckel ist in einer Durchtrittsöffnung für den Airbag in der Armaturentafel angebracht. Er ist über Scharnierbänder und zwei Befestigungsplatten an zwei Grundplatten der Airbagmodulbefestigung eingeclipst angebracht. Bei der Montage des Airbags wird zunächst das Airbagmodul zusammen mit den Grundplatten am Karosseriekörper befestigt. Dann werden die Befestigungsplatten in die Grundplatten eingeclipst der Deckel wird mit weiteren Befestigungsmitteln über der Durchtrittsöffnung angebracht. Bei der Montage des Deckels und seiner Anbindung ist sicherzustellen, dass nicht nur der Deckel in die Armaturentafel eingesetzt ist, sondern auch seine "Anbindung" eingeclipst ist.

In der DE 43 28 721 A1 wird die Anordnung eines Airbagmoduls an der Beifahrerseite eines Kraftfahrzeuges beschrieben. Das Airbagmodul ist über Träger am Karosseriekörper befestigt und von einem Deckel abgedeckt, der in einer Durchtrittsöffnung für den Airbag in der Armaturentafel angebracht ist. Dabei ist der Deckel über mindestens ein Scharnierband oder Sollknickstellen an einem Abdeckungsrahmen der Armaturentafel angelenkt oder aber direkt als integrales Teil der Armaturentafel mit ihr verbunden. Das Airbagmodul ist unabhängig von der Armaturentafel durch Träger an der tragenden Struktur des Karosseriekörpers befestigt.

Eine Gassackrückhalteeinrichtung mit einem Deckel in der Armaturentafel, dessen Anbindung für den Fall einer Gassackauslösung ebenfalls an der Armaturentafel angebracht ist, hat den Nachteil, dass die Armaturentafel besonders stabil ausgeführt werden muss. Außerdem kann, durch die auftretenden Kräfte beim Rückhalten des Deckels nach einer Gassackauslösung, die Armaturentafel beschädigt werden. Desweiteren ist durch einen hohen Aufwand bei der Montage des Deckels und seiner Anbindung sicherzustellen, dass nicht nur der Deckel in die Armaturentafel eingesetzt ist, sondern auch seine Anbindung an der Armaturentafel angebracht ist. Unter Anbindung wird im Sinne der Erfindung ein Scharnierband verstanden, das allerdings auch eine große Länge aufweisen kann. Ein solches Scharnierband wird dann zum Teil auch als Fangband bezeichnet. Die Länge eines Scharnierbands ist abhängig von der gewünschten Öffnungsbewegung für den Deckel.

Aufgabe der Erfindung ist es, eine Gassackrückhalteeinrichtung für ein Kraftfahrzeug zu schaffen, bei deren Montage eine hohe Prozesssicherheit gewährleistet ist, insbesondere hinsichtlich der Anbindung des Deckels in der Armaturentafel, der mindestens auf einer Teilstrecke seiner Öffnungsbewegung durch mindestens ein Scharnierband auf einer definierten Bewegungsbahn gehalten wird.

Diese Aufgabe wird durch die Merkmale des Patentanspruches 1 gelöst. Vorteilhafte Ausgestaltungen und Weiterbildungen der Erfindung sind den Unteransprüchen zu entnehmen. Die selbe Befestigungseinrichtung für Schamierband und Gassackmodul hat den Vorteil, daß die Montage der Gassackrückhalteeinrichtung einfacher und preiswerter ist. Außerdem wird die Prozeßsicherheit bei der Montage erhöht, da weniger Verbindungsstellen zu montieren und zu kontrollieren sind und die Verbindung von Gassackmodul und Schamierband mit dem Karosseriekörper sofort nacheinander oder zusammen im Montageprozeß erfolgen kann. Das vereinfacht die Kontrolle sowohl in örtlicher, als auch in zeitlicher Hinsicht. Es ist sozusagen auf einen Blick erkennbar, daß Gassackmodul und Scharnierband befestigt sind. Zusätzlich bewirkt eine Befestigung des Scharnierbands am Karosseriekörper, daß durch die Rückhaltekräfte für den Deckel keine Verformung oder Zerstörung der Armaturentafel eintritt, was im Reparaturfall zu Kosteneinsparung führt.

Bei einer bevorzugten Ausführung der Erfindung besteht die Befestigungseinrichtung aus Befestigungselementen, wobei mindestens ein erstes Befestigungselement das Gassackmodul am Karosseriekörper festlegt und ein zweites Befestigungselement durch einen Bügel gebildet wird, an dem das Scharnierband angebracht ist. Zusätzlich besitzt der Karosseriekörper eine Halteeinrichtung für das erste und/oder zweite Befestigungselement, die so gestaltet ist, daß das erste Befestigungselement das Gassackmodul und den Bügel am Karosseriekörper festlegt.

Dabei kommen als erstes Befestigungselement zum Beispiel zwei Schrauben in Frage, die durch ein Rahmenteil des Gassackmoduls durchgesteckt sind.

Wird das Scharnierband über einen Bügel am Karosseriekörper angebracht, hat das den Vorteil, daß sich der Bügel beim Auftreten der Rückhaltekraft für den Dekkel verformen kann und dabei Energie abbaut. Dabei ist durch das erste Befestigungsetement, das Gassackmodul und Bügel festlegt, vorteilhafterweise sichergestellt, daß mit der Montage des Gassackmoduls auch das Schamierband zum Zurückhalten des Deckels verankert ist.

Eine weitere bevorzugte Ausführung der Erfindung sieht vor, daß das Schamierband an einem Ende eine Lasche bildet, die um den Bügel herumgeschleift ist. Dies ergibt eine einfache und montagefreundliche Ausführung einer Befestigung des Schamierbands am Bügel.

Bei einem Schamierband, dessen Längen-/Breitenverhältnis größer 1 ist, kann vorteilhafterweise der Bügel in größerer Entfernung zur Armaturentafel am Karosseriekörper vorgesehen werden.

Ist das Schamierband ein Gewebeband, dessen bügelseitiges Ende zu einer Lasche vernäht ist, hat das den Vorteil, daß es auf einfache Weise hergestellt werden kann. Außerdem kann eine solche Befestigungsart mit einem Gewebeband hohe Kräfte aufnehmen.

Eine vorteilhafte Ausführung der Erfindung sieht vor, daß der Bügel ein Blechpreßteil ist, das aus einem Rohr durch Zusammenpressen seiner Enden hergestellt ist. Das hat den Vorteil, daß sich der Bügel einfach und preiswert herstellen läßt. Außerdem läßt sich dieser an den flächigen Stellen exakt mit dem Karosseriekörper oder der Halteeinrichtung verbinden.

Desweiteren können die flächigen Stellen mit einem größeren Umfang ausgebildet werden, was ermöglicht, daß durch Verkleinern der Lasche des Scharnierbands nach dem Aufschieben über ein Ende des Bügels, dieses unverlierbar und zwischen den Enden des Bügels verschiebbar festgelegt ist. Das Verkleinern der Lasche wird vorteilhafterweise durch formschlüssiges Verbinden der Innenseiten des die Lasche bildenden Gewebebandes bewirkt. So entsteht vor der Montage am Karosseriekörper eine Zusammenbaueinheit aus Deckel mit Scharnierband und Bügel, die die Prozeßsicherheit beim Anbau an den Karosseriekörper weiter erhöht. Es muß nur noch die Verbindungsstelle des Bügels zum Karosseriekörper überprüft werden.

Eine weitere vorteilhafte Ausführung der Erfindung sieht vor, daß das Scharnierband, in Längsrichtung des Bügels gesehen, durch das erste Befestigungselement über einen Bereich des Bügels verschiebbar auf dem Bügel gesichert ist. ist das Scharnierband verschiebbar auf dem Bügel gehalten, so hat das den Vorteil, daß Kraftspitzen beim Zurückhalten des Deckels ausgeglichen werden und dadurch ein günstiger Kraftverlauf entsteht.

Dies kann desweiteren dadurch noch verbessert werden, daß mindestens zwei Scharnierbänder in im wesentlichen paralleler Anordnung zum Halten des Deckels verwendet werden, die um den Bügel herumgeschleift an diesem befestigt sind. Außerdem wird dadurch der Deckel in Querrichtung des Fahrzeugs besser auf seiner Bewegungsbahn geführt und die Bruchsicherheit für die Scharnierbänder wird erhöht.

Bei einer weiteren bevorzugten Ausführung der Erfindung besitzt der Bügel in Seitenansicht, ausgehend von seiner Befestigungsstelle am Karosseriekörper, zwei Hebelarme, wobei am ersten Hebelarm das Scharnierband und am zweiten Hebelarm mindestens ein weiteres Scharnierband angebracht ist.

Durch die beiden von der Befestigungsstelle des Bügels am Karosseriekörper ausgehenden Hebelarme und den daran befestigten Schamierbändern wird das Kräfteverhältnis am Bügel bezüglich der Befestigungsstelle ausgeglichen. Der Bügel kann sich unter der Rückhaltekraft günstig verformen, wobei das weitere Scharnierband vorteilhafterweise dazu verwendet werden kann, den Öffnungswinkel des Deckels zu begrenzen.

Ist der Bügel in Seitenansicht im wesentlichen S-förmig ausgebildet, wobei die Befestigungsstelle des Bügels am Karosseriekörper etwa in der Mitte des Bügels liegt und das Schamierband und das weitere Schamierband jeweils an einem Ende der Hebelarme angebracht sind, so kann die Rückhaltekraft für den Deckel besonders günstig vom Bügel durch Verformung aufgenommen und abgebaut werden. Dies hat sich durch Versuche ergeben, wobei festgestellt wurde, daß erst bei sehr hohen Rückhaltekräften für den Deckel der Karosseriekörper mitverformt wird.

Bei einer weiteren bevorzugten Ausführung der Erfindung ist der Bügel in Draufsicht etwa U-förmig gebogen und besitzt als Schenkel jeweils die beiden in Seitenansicht im wesentlichen S-förmigen Hebelarme, wobei das Ende der Hebelarme, an dem das Scharnierband angebracht ist, die beiden Schenkel verbindet. Dies ergibt eine besonders einfache und preiswert herzustellende Bügelausführung, bei der das weitere Scharnierband mit jeweils einem seiner Enden an jeweils einem Ende des Bügels angebracht werden kann. In dieser Ausführung der Erfindung ist zusätzlich noch die Schamierbandbefestigung und -führung sehr einfach ausgebildet. Zusätzlich kann vorteilhafterweise der Öffnungswinkel des Deckels durch die Länge des weiteren Schamierbands exakt begrenzt werden. Bei nach schräg oben sich aus der Armaturentafel herausbewegendem Deckel kann durch die Begrenzung des Öffnungswinkels vorteilhafterweise eine Zerstörung der Windschutzscheibe verhindert werden.

Eine weitere vorteilhafte Ausführung der Erfindung hat sich als günstig zur Öffnungswinkelbegrenzung des Deckels erwiesen, nämlich wenn das weitere Scharnierband im wesentlichen quer zu dem Scharnierband verläuft, das den Dekkel auf seiner Bewegungsbahn hält.

Eine trotz hoher Kräfte sehr stabile Verbindung zwischen Deckel und Scharnierband ergibt sich, wenn das Scharnierband durch Ausnehmungen im Deckel durchgeführt ist. Dies gilt insbesondere für das weitere Schamierband, wenn dessen Enden jeweils an einem Ende des Bügels angebracht sind.

Eine weitere bevorzugte Ausführung der Erfindung sieht vor, daß die Befestigungseinrichtung so gestaltet ist, daß die Befestigung des Gassackmoduls die Befestigung des Bügels bedingt und/oder umgekehrt. Dadurch wird die Prozeßsicherheit bei der Montage auf einfache Weise zusätzlich erhöht. Wenn die Scharnierbänder vorher unverlierbar am Bügel angebracht sind, werden sie mit der Befestigung des Gassackmoduls zwangsläufig am Karosseriekörper befestigt. Ohne die Festlegung des Bügels ist es nicht möglich das Gassackmodul zu befestigen oder umgekehrt.

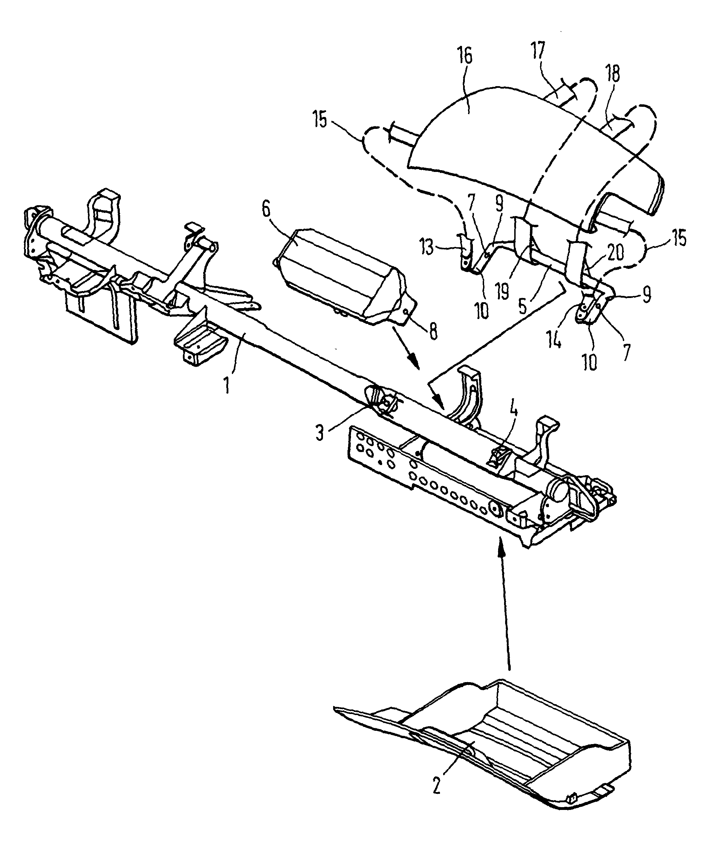

Ein bevorzugtes Ausführungsbeispiel der Erfindung ist in der nachfolgenden Beschreibung und der zugehörigen Zeichnung näher dargestellt. Die einzige Figur zeigt eine Gassackrückhalteeinrichtung zur Anbringung an eine Karosseriestruktur in Explosionsdarstellung.

Unter einer nicht gezeichneten Armaturentafel verläuft ein Querträger 1 eines Karosseriekörpers. An dem Querträger 1 sind unter anderem eine nicht gezeichnete Lenksäule, die Armaturentafel und ein Handschuhfach 2 befestigt. Im Bereich vor einem nicht gezeichneten Beifahrersitz ist an dem Querträger 1 eine Halteeinrichtung angebracht. Sie besteht aus zwei Gewindebolzen 3, 4 zur Aufnahme eines Bügels 5 und eines Gassackmoduls 6 über Bohrungen 7, 8 und zu deren Festlegung durch nicht gezeichnete Gewindemuttem, die auf die Gewindebolzen 3, 4 aufgeschraubt werden.

Der Bügel 5 besitzt, ausgehend von seiner Befestigungsstelle an der Halteeinrichtung, den Bohrungen 7, jeweils zwei Hebelarme 9, 10. Dabei sind die ersten Hebelarme 9 miteinander so verbunden, daß der Bügel 5 in Draufsicht etwa U-förmig gebogen ist und als jeweiligen Schenkel auf jeder Seite die beiden Hebelarme 9, 10 besitzt. Die Schenkel sind in Seitenansicht im wesentlichen S-förmig ausgebildet, wobei die Befestigungsstelle des Bügels am Karosseriekörper, die Bohrungen 7, etwa in der Mitte liegt. Die zweiten Hebelarme 10 der Schenkel erstrecken sich von der Befestigungsstelle des Bügels 5, den Bohrungen 7, von den ersten Hebelarmen 9 weggerichtet und besitzen an ihrem Ende jeweils eine Aufnahmeeinrichtung für ein Ende 13, 14 eines weiteren Schamierbandes 15. Das weitere Scharnierband 15 ist mit einem Deckel 16 verbunden, indem es durch nicht gezeichnete Ausnehmungen im Deckel 16 durchgeführt ist. Desweiteren sind mit dem Deckel 16 zwei Enden zweier Schamierbänder 17, 18 fest verbunden, die im wesentlichen quer zu dem weiteren Scharnierband 15 verlaufen. Die anderen Enden der beiden Scharnierbänder 17,18 bilden jeweils eine Lasche 19, 20, die um den Bügel 5 herumgeschleift ist.

Die Befestigungsstellen der Scharnierbänder 17, 18 und des weiteren Schamierbandes 15 am Bügel 5 und am Deckel 16 sind in der Zeichnung dargestellt, während der Verlauf der Scharnierbänder 17,18 und des weiteren Scharnierbandes 15 nur angedeutet gezeichnet ist, durch gestrichelte Linien, anschließend an Bruchlinien.

Der Deckel 16 ist Teil einer Gassackrückhalteeinrichtung, die aus dem Gassackmodul 6 und dem Deckel 16 zum Verschließen einer nicht gezeichneten Öffnung in der nicht gezeichneten Armaturentafel besteht. Der Deckel 16 wird nach dem Auslösen des Gassackmoduls 6 von einem nicht gezeichneten Gassack zum Innenraum des Kraftfahrzeugs hin aufgestoßen und von den Scharnierbändem 17, 18 und dem weiteren Schamierband 15 auf einer definierten Bewegungsbahn gehalten. Dabei legen die Scharnierbänder 17, 18 die Bewegungsbahn des Deckels 16 fest und das weitere Schamierband 15 begrenzt dessen Öffnungswinkel.

Die beiden Schamierbänder 17, 18 und das weitere Scharnierband 15 und das Gassackmodul 6 sind über eine Befestigungseinrichtung am Karosseriekörper angebracht. Die Befestigungseinrichtung besteht aus Befestigungselementen, wobei ein erstes Befestigungselement, die nicht gezeichneten Gewindemuttern, das Gassackmodul 6 am Karosseriekörper, dem Querträger 1, festlegt. An einem zweiten Befestigungselement, dem Bügel 5, sind die Schamierbänder 17, 18 und das weitere Scharnierband 15 angebracht. Die Halteeinrichtung, Gewindebolzen 3, 4, ist so gestaltet, daß das erste Befestigungselement das Gassackmodul 6 und den Bügel 5 am Querträger 1 festlegt.

Der Deckel 16 ist in die nicht gezeichnete Armaturentafel herausnehmbar eingesetzt, in einer Entfernung vom Bügel 5, daß das Längen-/Breitenverhältnis der Scharnierbänder 17, 18 und des weiteren Scharnierbandes 15 größer als 1 ist. Die Scharnierbänder 17, 18 und das weitere Scharnierband 15 sind aus einem Gewebeband hergestellt.

Die beiden bügelseitigen Enden der Scharnierbänder 17, 18 sind zu Laschen 19, 20 vernäht, die auch im nicht montierten Zustand des Bügels 5 unverlierbar auf diesem gehalten werden. Der Bügel 5 ist ein Blechpreßteil, das aus einem Rohr durch Zusammenpressen seiner Enden hergestellt ist. Unverlierbar und verschiebbar festgelegt sind die Scharnierbänder 17, 18, durch Verkleinern der Laschen 19, 20, durch formschlüssiges Verbinden der Innenseiten des die Laschen 19, 20 bildenden Gewebebandes nach dem Aufschieben über ein Ende des Bügels 5. Durch das erste Befestigungselement, nicht gezeichnete Gewindemuttern auf den Gewindebolzen 3, 4, sind die Schamierbänder 17, 18 im montierten Zustand des Bügels 5, in Längsrichtung des Bügels 5 gesehen, über einen Bereich des Bügels 5 bis zum Gewindebolzen 3, 4 verschiebbar auf dem Bügel 5 gesichert.

Wird nun das erste Befestigungselement, in einer nicht dargestellten anderen Ausführungsform der Erfindung, zum Beispiel am Bügel festgelegt und der Bügel zu seiner Festlegung am Querträger notwendigerweise vorher in die Halteeinrichtung eingebracht, worin er durch das erste Befestigungselement fixiert wird, so muß die Befestigungseinrichtung so gestaltet sein, daß die Befestigung des Gassackmoduls durch das erste Befestigungselement die Befestigung des Bügels bedingt. Auf diese Weise wird die Prozeßsicherheit bei der Montage zusätzlich erhöht, da Gassackmodul und Bügel mit der ersten Befestigungseinrichtung nur zusammen montiert werden können, wobei der Bügel die an ihm unverlierbar gehaltenen, vormontierten Schamierbänder festlegt.

## Patentansprüche

1. Gassackrückhalteeinrichtung in einem Kraftfahrzeug mit einem Karosseriekörper (1) und einer Armaturentafel, wobei die Gassackrückhalteeinrichtung aus einem Gassackmodul (6) hinter der Armaturentafel und aus einem Deckel (16) zum Verschließen einer Öffnung in der Armaturentafel besteht, und der Deckel (16) nach dem Auslösen des Gassackmoduls (6) von einem Gassack zum Innenraum des Kraftfahrzeugs hin aufgestoßen und von mindestens einem Scharnierband (17,18), mindestens auf einer Teilstrecke seiner Öffnungsbewegung, auf einer definierten Bewegungsbahn gehalten wird, wobei das Scharnierband (17, 18) und das Gassackmodul (6) über eine Befestigungseinrichtung am Karosseriekörper (1) angebracht sind, wobei die Befestigungseinrichtung aus Befestigungselementen (3, 4, 5) besteht, von denen ein erstes Befestigungselement (3, 4) das Gassackmodul (6) und ein zweites Befestigungselement (5), an dem das Schamierband (17, 18) angebracht ist, am Karosseriekörper (1) festlegt , wobei die Befestigung des Gassackmoduls (6) die Befestigung des zweiten Befestigungselements (5) bedingt und/oder umgekehrt, **dadurch gekennzeichnet, dass** das Scharnierband (17, 18) unmittelbar am zweiten Befestigungselement (5) befestigt ist, wobei durch das erste Befestigungselement (3, 4), das das Gassackmodul (6) und das zweite Befestigungselement (5) am Karosseriekörper (1) festlegt, sichergestellt ist, dass mit der Montage des Gassackmoduls (6) auch das an dem zweiten Befestigungselement (5) vormontierte Scharnierband (17, 18) verankert ist.

2. Gassackrückhalteeinrichtung nach Anspruch 1, **dadurch gekennzeichnet, dass** als erstes Befestigungselement (3, 4) zwei Schrauben durch ein Rahmenteil des Gassackmoduls (6) durchgesteckt sind und dass das zweite Befestigungselement (5) durch einen Bügel gebildet ist und dass der Karosseriekörper (1) eine Halteeinrichtung für mindestens eines der Befestigungselemente (3, 4, 5) besitzt, die so gestaltet ist, dass das erste Befestigungselement das Gassackmodul (6) und den Bügel am Karosseriekörper (1) festlegt.

3. Gassackrückhalteeinrichtung nach Anspruch 2, **dadurch gekennzeichnet, daß** das Schamierband (17,18) an einem Ende eine Lasche (19,20) bildet, die um den Bügel (5) herumgeschleift ist.

4. Gassackrückhalteeinrichtung nach einem der Ansprüche 1 bis 3, **dadurch gekennzeichnet, daß** das Längen-/Breitenverhältnis des Schamierbands (17,18) größer 1 ist.

5. Gassackrückhalteeinrichtung nach einem der Ansprüche 3 oder 4, **dadurch gekennzeichnet, daß** das Scharnierband (17,18) ein Gewebeband ist, dessen bügelseitiges Ende zu einer Lasche (19,20) vernäht ist.

6. Gassackrückhalteeinrichtung nach einem der Ansprüche 2 bis 5, **dadurch gekennzeichnet, daß** der Bügel (5) ein Blechpreßteil ist, das aus einem Rohr durch Zusammenpressen seiner Enden hergestellt ist.

7. Gassackrückhalteeinrichtung nach einem der Ansprüche 2 bis 6, **dadurch gekennzeichnet, daß** das Scharnierband (17,18) unverlierbar und verschiebbar zwischen den Enden des Bügels (5) festgelegt ist, insbesondere durch ein Verkleinern der Lasche (19,20) nach dem Aufschieben über ein Ende des Bügels (5) durch formschlüssiges Verbinden der Innenseiten des die Lasche (19,20) bildenden Gewebebandes.

8. Gassackrückhalteeinrichtung nach einem der Ansprüche 2 bis 7, **dadurch gekennzeichnet, daß** das Scharnierband (17,18), in Längsrichtung des Bügels (5) gesehen, durch das erste Befestigungselement über einen Bereich des Bügels (5) verschiebbar auf dem Bügel (5) gesichert ist.

9. Gassackrückhalteeinrichtung nach einem der Ansprüche 2 bis 8, **dadurch gekennzeichnet, daß** mindestens zwei Schamierbänder (17,18) in im wesentlichen paralleler Anordnung zum Zurückhalten des Deckels (16) verwendet werden, die um den Bügel (5) herumgeschleift an diesem befestigt sind.

10. Gassackrückhalteeinrichtung nach einem der Ansprüche 2 bis 9, **dadurch gekennzeichnet, daß** der Bügel (5) in Seitenansicht, ausgehend von seiner Befestigungsstelle am Karosseriekörper, zwei Hebelarme (9,10) besitzt, wobei am ersten Hebelarm (9) das Scharnierband (17,18) und am zweiten Hebelarm (10) mindestens ein weiteres Schamierband (15) angebracht ist.

11. Gassackrückhalteeinrichtung nach Anspruch 10, **dadurch gekennzeichnet, daß** der Bügel (5) in Seitenansicht im wesentlichen S-förmig ausgebildet ist, wobei die Befestigungsstelle des Bügels (5) am Karosseriekörper etwa in der Mitte des Bügels (5) liegt und das Schamierband (17,18) und das weitere Scharnierband (15) jeweils an einem Ende der Hebelarme (9,10) angebracht sind.

12. Gassackrückhalteeinrichtung nach Anspruch 10 oder 11, **dadurch gekennzeichnet, daß** der Bügel (5) in Draufsicht etwa U-förmig gebogen ist und als Schenkel jeweils die beiden in Seitenansicht im wesentlichen S-förmigen Hebelarme (9,10) besitzt, wobei das Ende der Hebelarme (9,10), an dem das Scharnierband (17,18) angebracht ist, die beiden Schenkel verbindet.

13. Gassackrückhalteeinrichtung nach einem der Ansprüche 10 bis 12, **dadurch gekennzeichnet, daß** das weitere Schamierband (15) mit jeweils einem seiner Enden (13,14) an jeweils einem Ende des Bügels (5) angebracht ist.

14. Gassackrückhalteeinrichtung nach einem der Ansprüche 10 bis 13, **dadurch gekennzeichnet, daß** das weitere Schamierband (15) im wesentlichen quer zu dem Scharnierband (17,18) verläuft, das den Deckel (16) auf seiner Bewegungsbahn hält.

15. Gassackrückhalteeinrichtung nach einem der Ansprüche 10 bis 14, **dadurch gekennzeichnet, daß** das Schamierband (17,18) und/oder das weitere Scharnierband (15) mit dem Deckel (16) verbunden ist, indem es durch Ausnehmungen im Deckel (16) durchgeführt ist.

## Claims

1. An airbag retaining device in a motor vehicle comprising a body (1) and a dashboard, wherein the airbag retaining device comprises an airbag module (6) behind the dashboard and a cover (16) for closing an opening in the dashboard, and after the airbag module (6) has been released, the cover (16) is ejected from an airbag into the interior of the vehicle and is held on a defined path by at least one hinge strap (17, 18), at least over a part of its opening motion, wherein the hinge strap (17, 18) and the airbag module (6) are attached to the vehicle body (1) by a fastening device, wherein the fastening device comprises fastening elements (3, 4, 5), the first element (3, 4) securing the airbag module (6) and securing a second fastening element (5) to the body (1), the hinge strap (17, 18) being attached to the second element, wherein the second fastening element (5) is fastened when the airbag module (6) is fastened and/or vice versa, **characterised in that** the hinge strap (17, 18) is directly fastened to the second fastening element (5), wherein the first fastening element (3, 4), which secures the airbag module (6) and the second fastening element (5) to the vehicle body (1), ensures that when the airbag module (6) is installed, the hinge strap (17, 18) previously mounted on the second fastening element (5) is also anchored.

2. An airbag retaining device according to claim 1, **characterised in that** the first fastening element (3, 4) comprises two screws inserted through a frame part of the airbag module (6) and the second fastening element (5) is in the form of a first member and the vehicle body (1) has a device for retaining at least one of the fastening elements (3, 4, 5) and designed so that the first fastening element secures the airbag module (6) and the curved member to the vehicle body (1).

3. An airbag retaining device according to claim 2, **characterised in that** the hinge strap (17, 18) at one end forms a shackle (19, 20) which is looped round the curved member (5).

4. An airbag retaining device according to any of claims 1 to 3, **characterised in that** the length/width ratio of the hinge strap (17, 18) is greater than unity.

5. An airbag retaining device according to claim 3 or claim 4, **characterised in that** the hinge strap (17, 18) is a fabric strap and its end near the curved member is sewn to form a shackle (19, 20).

6. An airbag retaining device according to any of claims 2 to 5, **characterised in that** the curved member (5) is a sheet-metal pressed part made by compressing the ends of a tube.

7. An airbag retaining device according to any of claims 2 to 6, **characterised in that** the hinge strap (17, 18) is non-detachably secured so as to be movable between the ends of the curved member (5), especially by reducing the size of the shackle (19, 18) after sliding it over the end of the curved member (5), by positively connecting the inner sides of the fabric strap forming the shackle (19, 20).

8. An airbag retaining device according to any of claims 2 to 7, **characterised in that** the hinge strap (17, 18), considered in the longitudinal direction of the curved member (5), is secured by the first fastening element so as to be movable on the curved member (5) over a region thereof.

9. An airbag retaining device according to any of claims 2 to 8, **characterised in that** at least two substantially parallel hinge straps (17, 18) are used for retaining the cover (16) and are looped round and fastened to the curved member (5).

10. An airbag retaining device according to any of claims 2 to 9, **characterised in that** the curved member (5) in side view, starting from the place where it is secured to the vehicle body, has two lever arms (9, 10), the hinge strap (17, 18) being attached to the first lever arm (9) and at least one additional hinge strap (15) being attached to the second lever arm (10).

11. An airbag retaining device according to claim 10, **characterised in that** the curved member (5) in side view is substantially S-shaped, wherein the place where the curved member (5) is fastened to the vehicle body is approximately in the middle of the curved member (5) and the hinge strap (17, 18) and the additional hinge strap (15) are each disposed at one end of the lever arms (9, 10).

12. An airbag retaining device according to claim 10 or claim 11, **characterised in that** the curved member (5) in plan view is approximately U-shaped and has limbs in the form of the two lever arms (9, 10) substantially S-shaped in side view, the two limbs being connected by the ends of the lever arms (9, 10) on which the hinge strap (17, 18) is mounted.

13. An airbag retaining device according to any of claims 10 to 12, **characterised in that** each end (13, 14) of the additional hinge strap (15) is attached to a respective end of the curved member (5).

14. An airbag retaining device according to any of claims 10 to 13, **characterised in that** the additional hinge strap (15) extends substantially at right angles to the hinge strap (17, 18) which holds the cover (16) on its path of motion.

15. An airbag retaining device according to any of claims 10 to 14, **characterised in that** the hinge strap (17, 18) and/or the additional hinge strap (15) is connected to the cover (16) by being inserted through recesses in the cover (16).

## Revendications

1. Installation de retenue de coussin gonflable de véhicule automobile comportant un corps de carrosserie (1) et un tableau de bord, installation de retenue de coussin gonflable se composant d'un module à coussin gonflable (6) derrière le tableau de bord et d'un couvercle (16) pour former une ouverture du tableau de bord, et dont après déclenchement du module à coussin gonflable (6), le couvercle (16) est expulsé par le coussin gonflable vers l'intérieur du véhicule, et est maintenu par au moins une patte de charnière (17, 18) sur au moins une partie de trajectoire dans son mouvement d'ouverture, sur une trajectoire définie, la patte de charnière (17, 18) et le module à coussin gonflable (6) étant installés sur le corps de carrosserie (1) par une installation de fixation, l'installation de fixation se composant d'éléments de fixation (3, 4, 5) dont un premier élément de fixation (3, 4) fixe le module à coussin gonflable (6) et dont le second élément de fixation (5) portant la patte de charnière (17, 18), est fixé sur le corps de carrosserie (1),
la fixation du module à coussin gonflable (6) conditionnant la fixation du second élément de fixation (5) et/ou inversement,
**caractérisée en ce que**
la patte de charnière (17, 18) est fixée directement sur le second élément de fixation (5),
le premier élément de fixation (3, 4) fixant le module à coussin gonflable (6) et le second élément de fixation (5) au corps de carrosserie (1), en garantissant ainsi qu'avec le montage du module à coussin gonflable (6), la patte de charnière (17, 18), préassemblée sur le second élément de fixation (5), soit également accrochée.

2. Installation de retenue de coussin gonflable selon la revendication 1,
**caractérisée en ce que**
le premier élément de fixation (3, 4) est constitué par deux vis engagées dans une partie de châssis du module à coussin gonflable (6) et le second élément de fixation (5) est formé par un étrier et
le corps de carrosserie (1) comporte une installation de fixation pour au moins l'un des éléments de fixation (3, 4, 5), cette installation étant conçue pour que le premier élément de fixation bloque le module à coussin gonflable (6) et l'étrier au corps de carrosserie (1).

3. Installation de retenue de coussin gonflable selon la revendication 2,
**caractérisée en ce que**
la patte de charnière (17, 18) forme à une extrémité une boucle (19, 20) passant autour de l'étrier (5).

4. Installation de retenue de coussin gonflable selon l'une quelconque des revendications 1 à 3,
**caractérisée en ce que**
le rapport longueur/largeur de la patte de charnière (17, 18) est supérieur à 1.

5. Installation de retenue de coussin gonflable selon l'une quelconque des revendications 3 ou 4,
**caractérisée en ce que**
la patte de charnière (17, 18) est un ruban tissé dont l'extrémité du côté de l'étrier est cousue pour former une boucle (19, 20).

6. Installation de retenue de coussin gonflable selon l'une quelconque des revendications 2 à 5,
**caractérisée en ce que**
l'étrier (5) est une pièce en tôle emboutie fabriquée à partir d'un tube par compression de ses extrémités.

7. Installation de retenue de coussin gonflable selon l'une quelconque des revendications 2 à 6,
**caractérisée en ce que**
la patte de charnière (17, 18) est fixée de manière imperdable et coulissante entre les extrémités de l'étrier (5), en particulier par réduction de la boucle (19, 20) après engagement sur une extrémité de l'étrier (5), par une liaison par la forme des côtés intérieurs de la bande de tissu reliant la boucle (19, 20).

8. Installation de retenue de coussin gonflable selon l'une quelconque des revendications 2 à 7,
**caractérisée en ce que**
la patte de charnière (17, 18), vue dans la direction longitudinale de l'étrier (5), est fixée de manière coulissante sur l'étrier (5) par le premier élément de fixation sur une plage de l'étrier (5).

9. Installation de retenue de coussin gonflable selon l'une quelconque des revendications 2 à 8,
**caractérisée en ce qu'**
au moins deux pattes de charnière (17, 18) constituent un montage essentiellement parallèle pour retenir le couvercle (16), ces pattes entourant en boucle l'étrier (5) en étant fixées à celui-ci.

10. Installation de retenue de coussin gonflable selon l'une quelconque des revendications 2 à 9,
**caractérisée en ce qu'**
en vue de côté, à partir de son point de fixation au corps de carrosserie, l'étrier (5) comporte deux bras de levier (9, 10), le premier bras de levier (5) portant la patte de charnière (17, 18) et le second bras de levier (10) au moins une autre patte de charnière (15).

11. Installation de retenue de coussin gonflable selon la revendication 10,
**caractérisée en ce qu'**
en vue de côté, l'étrier (5) a essentiellement une forme de S, le point de fixation de l'étrier (5) au corps de carrosserie se situant sensiblement au milieu de l'étrier (5) et la patte de charnière (17, 18) ainsi que l'autre patte de charnière (15) étant prévus chaque fois à une extrémité des bras de levier (9, 10).

12. Installation de retenue de coussin gonflable selon l'une quelconque des revendications 10 ou 11,
**caractérisée en ce que**
l'étrier (5) est cintré en vue de dessus suivant une forme sensiblement en U et ses branches sont chaque fois les deux bras de levier (9, 10) essentiellement en forme de S en vue de côté, l'extrémité des bras de levier (9, 10) étant prévue sur la patte de charnière (17, 18) reliant les deux branches.

13. Installation de retenue de coussin gonflable selon l'une quelconque des revendications 10 à 12,
**caractérisée en ce que**
l'autre patte de charnière (15) est attachée chaque fois à une extrémité de l'étrier (5) par chacune de ses extrémités (13, 14).

14. Installation de retenue de coussin gonflable selon l'une quelconque des revendications 10 à 13,
**caractérisée en ce que**
l'autre patte de charnière (15) est dirigée essentiellement transversalement à la patte de charnière (17, 18) qui retient le couvercle (16) sur sa trajectoire.

15. Installation de retenue de coussin gonflable selon l'une quelconque des revendications 10 à 14,
**caractérisée en ce que**
la patte de charnière (17, 18) et/ou l'autre patte de charnière (15) est reliée au couvercle (16) en passant par des cavités du couvercle (16).
